# FASCICULE DE BREVET EUROPEEN

(11) **EP 2 165 233 B1**
(45) Date de publication et mention de la délivrance du brevet: **01.09.2010**
(21) Numéro de dépôt: 08806032.2
(22) Date de dépôt: 19.06.2008
(51) Int. Cl.: G02B 27/01, G02B 7/00

(54) **AFFICHEUR DESTINE A ETRE INTEGRE A UNE PAIRE DE LUNETTES**
ANZEIGE ZUR EINFÜGUNG IN EINE BRILLE
DISPLAY DESIGNED TO BE INCORPORATED INTO A PAIR OF SPECTACLES

(30) Priorité: 10.07.2007 FR 0756372
(43) Date de publication de la demande: 24.03.2010
(73) Titulaire: Essilor International (Compagnie Générale D'Optique), 94220 Charenton le Pont (FR)
(72) Inventeur: MOLITON, Renaud, décédé (FR)
(74) Mandataire: Lenne, Laurence
(86) Numéro de dépôt international: PCT/FR2008/051098
(87) Numéro de publication internationale: WO 2009/007567

(56) Documents cités:
- EP-A- 1 777 953
- WO-A-94/14152
- FR-A- 2 885 229
- US-B1- 6 441 978

## Description

La présente invention concerne un afficheur comportant un imageur optique destiné à permettre la projection d'informations, de type images ou multimédia et de préférence associé à une lentille. Est ici appelée « lentille » un système optique qui peut notamment être positionné dans une monture de lunettes.

Il est connu du brevet US 5 886 822 de réaliser une lentille présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

A titre d'exemple, l'imageur optique de l'invention est du même type que celui décrit dans le brevet US 5 886 822 déjà mentionné.

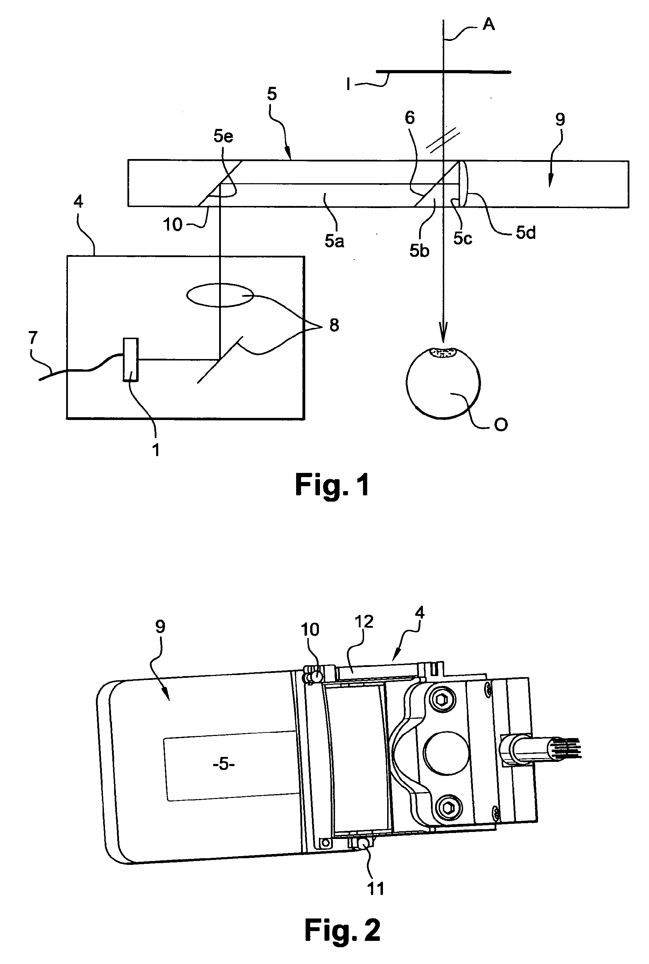

Si l'on se réfère à la figure 1, un signal électronique porteur d'une information est amené à un écran miniature 1 par un câble 7. A partir de ce signal, l'écran miniature 1, éclairé par un projecteur de fond, génère une image pixellisée correspondant à l'information. A titre d'exemple, il peut être utilisé un écran « KOPIN Cyberdisplay 320 color » générant des images de 320 x 240 pixels et d'une dimension de 4,8 mm x 3,6 mm. L'écran 1 est référencé au moyen d'une interface mécanique par rapport à l'imageur optique 5. Un boîtier de protection protège tout ou partie de l'ensemble. Des composants optiques 8, ici un miroir et une lentille, sont associés à l'écran 1.

Cet imageur optique 5 se compose ici d'un prisme de propagation 5a, d'un contre-prisme 5b, d'une lame quart d'onde 5c et d'un miroir de Mangin sphérique 5d. Le miroir de Mangin sphérique est une lentille plan-sphérique pour laquelle la face sphérique a été rendue réfléchissante au moyen d'un traitement aluminisé ou équivalent.

L'imageur 5 comporte également un traitement séparateur de polarisation 6 qui peut être réalisé sous forme d'un dépôt de couches minces, soit sur le prisme de propagation 5a, soit sur le contre-prisme 5b, soit au moyen d'un film collé entre les deux éléments précédemment cités.

L'imageur 5 est ici surmoulé dans une lentille 9 et le boîtier est disposé frontalement à l'arrière de la lentille, un traitement 5e réfléchissant étant alors inclus dans la lentille. Sur le même principe, le boîtier peut être disposé latéralement à cette lentille 9, l'élément réfléchissant 5e étant alors absent.

Le mot «lentille» concerne en particulier un verre, correcteur ou non, destiné à être monté dans une monture de lunettes. Ce verre de lunettes ophtalmique présente des fonctionnalités traditionnelles que sont la correction de la vue, l'anti-reflet, l'anti-salissure, l'anti-rayure, par exemple.

Il est connu de fixer le système de génération de faisceaux lumineux sur la lentille et également de permettre un réglage de la focalisation permettant d'ajuster la distance de visualisation de l'image informative et de la régler en conséquence afin de procurer au porteur une vision nette et confortable par l'agencement suivant. La lentille est solidaire d'un adaptateur constitué d'une platine portant deux tiges sur lesquelles est emboîté et peut glisser le boîtier du système de génération de faisceaux lumineux. Lors de ce réglage, le boîtier est plus ou moins emboîté manuellement sur les glissières pour régler la distance et ensuite bloqué par une vis transversale.

Ce type de dispositif de liaison et de réglage de la focalisation pose les problèmes techniques suivants.

Selon l'emboîtement, l'encombrement hors tout de l'afficheur varie. Ceci peut entraîner une contrainte dans sa réalisation.

Ce type de dispositif entraîne inévitablement beaucoup de jeu entre tiges et glissières, ce qui est préjudiciable à la précision de l'afficheur.

Le boîtier est en général en matière plastique et la platine avec ses tiges en métal. Il en résulte une usure rapide du boîtier augmentant encore le jeu et l'imprécision de l'afficheur.

Enfin, le réglage est effectué selon cet art antérieur manuellement, dans le sens où le porteur doit saisir le boîtier et le faire glisser sur les tiges jusqu'à obtention de la bonne focalisation. Il va de soi, qu'un tel agencement n'est pas très précis et d'utilisation très peu confortable, peu adapté à un usage courant non expérimental.

Il peut en conséquence être envisagé de réaliser un afficheur équipé d'un dispositif de réglage de la focalisation par réglage de la longueur des faisceaux optiques entre les éléments optiques et l'imageur, dont ledit dispositif de réglage est inclus dans le système de génération de faisceaux lumineux, ce système de génération de faisceaux lumineux comprenant par exemple une platine fixe, à laquelle est relié au moins un des éléments optiques par une connexion mobile réglable grâce un dispositif d'actionnement.

En conséquence, la liaison du système de génération de faisceaux lumineux sur la lentille n'a plus besoin de permettre un réglage de distance, mais doit être peu visible sur la lentille dans un souci d'esthétique tout en permettant un positionnement et un maintien précis ainsi qu'une mise en place facile.

Dans ce but, le document de brevet FR 2 885 229 propose un afficheur ophtalmique comprenant un imageur optique destiné à mettre en forme des faisceaux optiques émis d'un écran miniature d'un système de génération de faisceaux optiques introduits dans ledit imageur par une face d'entrée et à les diriger vers l'oeil du porteur pour permettre la visualisation d'une image, un adaptateur étant référencé par rapport à l'imageur et le système de génération de faisceaux lumineux comportant un agencement de liaison à l'adaptateur, la liaison entre le système et l'adaptateur étant amovible.

L'adaptateur est constitué de deux crochets d'encliquetage destinés à être logés dans des logements portés par l'agencement de liaison. Ces crochets sont ancrés dans des alésages agencés sur la face d'entrée de l'imageur.

L'agencement de liaison porté par le système de génération de faisceaux lumineux comporte deux lames sensiblement parallèles qui chacune porte un des logement d'encliquetage, un des logements étant porté par une languette agencée dans une des lames, dite lame supérieure, déformable élastiquement dans une direction sensiblement parallèle à un axe reliant l'axe des logements et dirigée sensiblement perpendiculairement à cet axe.

L'agencement de liaison porté par le système de génération de faisceaux lumineux comporte également deux pions d'appui, chaque pion étant porté par une lame et un des pions étant porté par une tige agencée dans le bras inférieur, déformable élastiquement dans une direction sensiblement perpendiculaire à un axe reliant l'axe des logements et dirigée sensiblement perpendiculairement à cet axe. Ces pions d'appui sont disposés de part et d'autre d'un plan longitudinal de l'agencement de liaison et passant par cet axe.

Si le nombre de pièces utilisées est ainsi minimisé, il s'avère cependant que cet agencement de liaison ne donne pas complète satisfaction, car son positionnement et son déplacement, afin d'assurer l'encliquetage des deux bras sur les crochets, sont relativement complexes. Ils nécessitent en plus d'exercer une poussée de déformation sur une languette déformable et de ce fait l'application d'un effort sur les crochets qui sont fragilisés en conséquence.

L'invention résout ces problèmes et, pour ce faire, elle propose un afficheur comprenant un imageur optique destiné à mettre en forme des faisceaux optiques émis d'un système de génération de faisceaux lumineux introduits dans ledit imageur par une face d'entrée et à les diriger vers l'oeil du porteur pour permettre la visualisation d'une image, deux crochets d'encliquetage étant référencés par rapport à l'imageur et ledit système de génération de faisceaux lumineux comportant un agencement de liaison auxdits crochets, la liaison entre ledit système et lesdits crochets étant amovible et lesdits crochets étant destinés à être logés dans des logements portés par ledit agencement de liaison, caractérisé en ce que lesdits logements sont agencés, de sorte que le montage dudit agencement de liaison sur lesdits crochets se réalise par appui sur un desdits crochets, rotation autour de cet appui et encliquetage sur l'autre crochet.

L'utilisation se fait sans actionneur ni outil extérieur, avec rapidité et facilité de maniement. Esthétiquement, les pièces résiduelles sur le verre de lunettes informatives, à savoir les deux crochets, sont très discrètes. L'encombrement général du système de liaison est minime, tant dans le système de génération de faisceaux lumineux que sur la lentille. La contribution au poids total est minime sachant que les pièces dédiées uniquement à l'accrochage sont les crochets.

L'avantage de ce type de solution réside dans sa bonne adaptation à l'accrochage d'un système de génération de faisceaux lumineux sur une lentille ou verre de lunettes informatives ayant de fortes contraintes mécaniques, optiques, d'encombrement, de poids et d'esthétisme.

De plus, ce mode de montage assure peu d'effort sur les crochets dont la durée de vie est ainsi allongée.

Et selon un mode de réalisation préféré de l'invention, de préférence, ledit imageur est intégré à une lentille d'une paire de lunettes.

Avantageusement, lesdits crochets sont constitués chacun d'une sphère disposée à l'extrémité d'une tige.

Une telle conception de crochet est particulièrement avantageuse, car elle diminue fortement les possibilités d'accrochage des crochets sur un tissu ou autre, lorsque la paire de lunettes n'est pas portée par l'utilisateur.

L'afficheur, de préférence, comporte un élément de poussée dudit agencement de liaison contre lesdits crochets, cette poussée étant sensiblement perpendiculaire à la face frontale de ladite lentille.

Ledit élément de poussée peut être une lame flexible portée par ledit système de génération et venant en appui contre ladite lentille, lors de ladite rotation dudit agencement de liaison.

De préférence, ledit appui sur un des crochets est un appui linéique perpendiculaire à la face frontale de ladite lentille.

Le logement assurant ledit appui linéique peut être formé de deux brides portées par ledit agencement de liaison et séparées d'une distance supérieure au diamètre de la tige du crochet.

De plus, avantageusement, ledit appui linéique est associé à un patin d'appui ponctuel sur ladite lentille, disposé sur l'agencement de liaison à proximité du logement assurant cet appui linéique.

Le logement assurant ledit encliquetage peut être formé d'un cliquet porté par ledit agencement de liaison.

Lesdits crochets sont avantageusement disposés respectivement à une distance différente d'un bord latéral de ladite lentille.

Lesdits crochets peuvent être ancrés dans des alésages agencés sur ladite face d'entrée dudit imageur.

Ledit agencement de liaison est, de préférence, usiné ou moulé dans une platine dudit système de génération de faisceaux lumineux.

Outre la grande facilité de montage, l'agencement de liaison ainsi obtenu assure une fixation fiable isostatique, sans mouvement résiduel, contrairement à celui de l'art antérieur déjà évoqué, dont la flexibilité des languettes formées dans les lames est difficile à calibrer.

L'invention concerne également une paire de lunettes dont au moins une lentille comporte un imageur intégré et est pourvue de deux dits crochets, afin de former un tel afficheur.

L'invention est décrite ci-après plus en détail à l'aide de figures ne représentant qu'un mode de réalisation préféré de l'invention.
La figure 1, vue schématique d'un afficheur connu, a été déjà précisée plus haut.
La figure 2 est une vue arrière d'un afficheur conforme à l'invention.
Les figures 3A et 3B sont des vues en perspective de dessus d'un afficheur conforme à l'invention.
Les figures 4 et 5 sont des vues en perspective de dessous d'un afficheur conforme à l'invention.
Les figures 6 et 7 sont des vues en perspective de dessous et de dessus, illustrant le montage d'un afficheur conforme à l'invention.

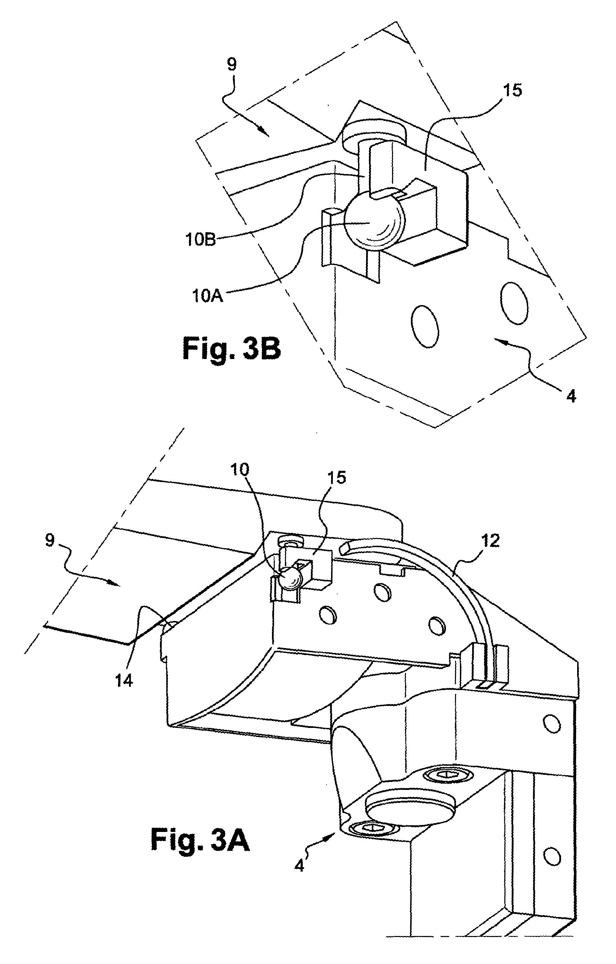

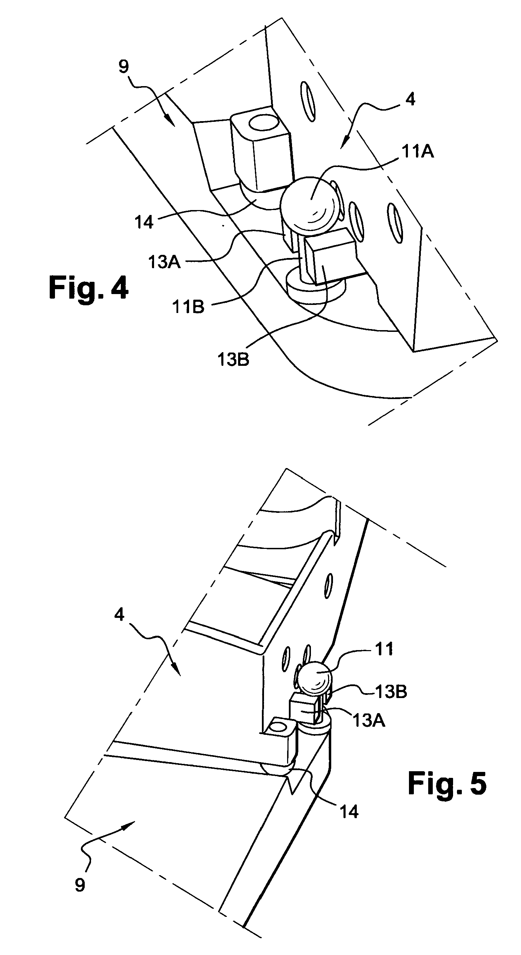

Comme illustré sur les figures 2 à 7, un afficheur ophtalmique comprend un imageur optique 5 destiné à mettre en forme des faisceaux optiques émis d'un système de génération 4 de faisceaux lumineux introduits dans l'imageur par une face d'entrée et à les diriger vers l'oeil du porteur pour permettre la visualisation d'une image. L'imageur 5 est intégré à une lentille 9 d'une paire de lunettes. Deux crochets 10 et 11 ancrés dans des alésages de la lentille 9, agencés sur la face d'entrée de l'imageur, sont référencés par rapport à l'imageur 5 et le système de génération 4 de faisceaux lumineux comporte un agencement de liaison aux crochets, la liaison entre ce système et les crochets étant amovible.

L'agencement de liaison est usiné ou moulé dans une platine du système de génération 4 de faisceaux lumineux, qui est de préférence en matière plastique.

Les crochets 10, 11 sont destinés à être logés dans des logements portés par l'agencement de liaison. Ils sont constitués chacun d'une sphère 10A, 11A disposée à l'extrémité d'une tige 10B, 11B. Ils sont disposés respectivement à une distance différente du bord latéral de la lentille 9.

L'afficheur comporte également un élément de poussée de l'agencement de liaison contre les crochets, cette poussée étant sensiblement perpendiculaire à la face frontale de la lentille 9 et parallèle à la tige des crochets 10, 11. Cet élément de poussée est ici une lame flexible 12 portée par le système de génération 4 et venant en appui contre la lentille 9, lors de la rotation de montage de l'agencement de liaison 4.

En effet, ces logements de l'agencement de liaison, destinés à recevoir les crochets, sont agencés, de sorte que le montage de l'agencement de liaison sur les crochets se réalise par appui sur un des crochets, rotation autour de cet appui et encliquetage sur l'autre crochet. Cette opération de montage sera précisée plus loin.

Cet appui sur un des crochets, ici le crochet inférieur 11, est un appui linéique perpendiculaire à la face frontale de la lentille 9.

Le logement assurant cet appui linéique sur la tige 11 B du crochet 11 est formé de deux brides 13A, 13B portées par l'agencement de liaison et séparées d'une distance supérieure au diamètre de la tige 11 B du crochet.

Cet appui linéique est associé à un patin 14 d'appui ponctuel sur la lentille, disposé sur l'agencement de liaison à proximité des brides 13A, 13B assurant cet appui. Ce patin peut être en « Téflon ».

Le logement assurant l'encliquetage sur l'autre crochet, ici le crochet supérieur 10, est formé d'un cliquet 15 porté par l'agencement de liaison. Ce cliquet 15 est ouvert latéralement pour cet encliquetage et vient en appui contre la sphère 10A du crochet 10.

De préférence, la lentille 9 ici représentée seule est une lentille de paire de lunettes, éventuellement correctrice de la vue, et l'afficheur est binoculaire, chaque lentille comportant deux tels crochets et étant destinée à recevoir chacune un système de génération de faisceaux lumineux.

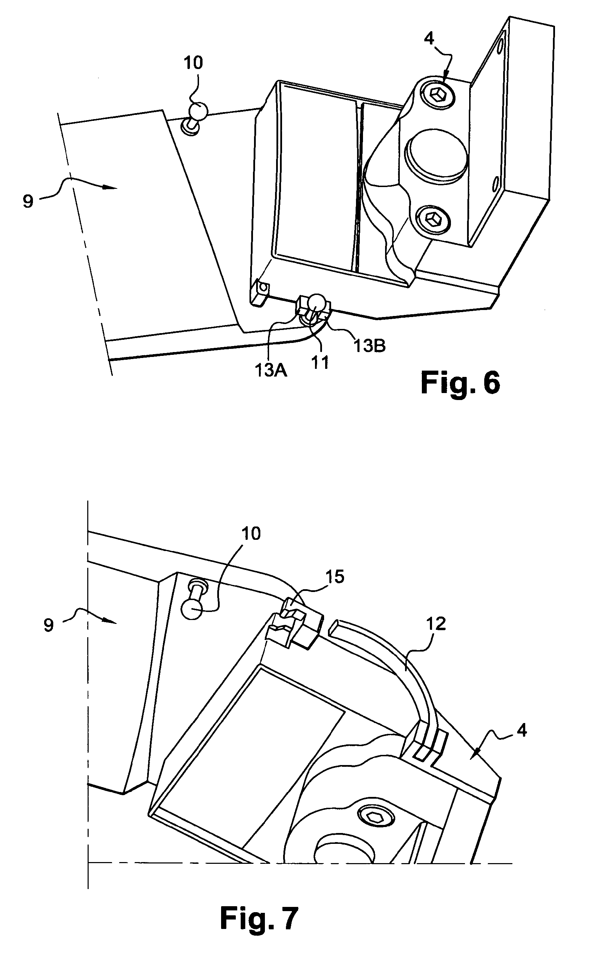

Les figures 6 et 7 illustrent le montage de l'agencement de liaison du système de génération 4 de faisceaux lumineux sur les crochets 10 et 11 solidaires de la lentille 9.

Ce montage se réalise tout d'abord par appui sur le crochet inférieur 11 inséré entre les deux brides 13A, 13B et positionnement du patin 14 sur la lentille 9, comme représenté sur ces figures.

Par rotation autour de cet appui linéique sur la bride 13B et glissement du patin, le système de génération est amené dans la position montée représentée sur les figures 2 à 5, la lame flexible 12 de par sa forme et sa position venant automatiquement se placer sur la lentille 9 et exercer son effort de poussée et le cliquet 15 venant, en fin de course de rotation, s'encliqueter sur le crochet supérieur 10.

## Revendications

1. Afficheur comprenant un imageur optique (5) destiné à mettre en forme des faisceaux optiques émis d'un système de génération (4) de faisceaux lumineux introduits dans ledit imageur par une face d'entrée et à les diriger vers l'oeil (O) du porteur pour permettre la visualisation d'une image (I), deux crochets (10, 11) étant référencés par rapport à l'imageur et ledit système de génération de faisceaux lumineux comportant un agencement de liaison auxdits crochets (10, 11), la liaison entre ledit système et lesdits crochets étant amovible et lesdits crochets (10, 11) étant destinés à être logés dans des logements portés par ledit agencement de liaison, **caractérisé en ce que** lesdits logements sont agencés, de sorte que le montage dudit agencement de liaison sur lesdits crochets se réalise par appui sur un desdits crochets (11), rotation autour de cet appui et encliquetage sur l'autre crochet (10).

2. Afficheur selon l'une des revendications précédentes, **caractérisé en ce que** ledit imageur (5) est intégré à une lentille (9) d'une paire de lunettes.

3. Afficheur selon l'une des revendications précédentes, **caractérisé en ce que** lesdits crochets sont constitués chacun d'une sphère (10A, 10B) disposée à l'extrémité d'une tige (11A, 11B).

4. Afficheur selon la revendication 2 ou 3, **caractérisé en ce qu'**il comporte un élément de poussée dudit agencement de liaison contre lesdits crochets (10, 11), cette poussée étant sensiblement perpendiculaire à la face frontale de ladite lentille (9).

5. Afficheur selon la revendication précédente, **caractérisé en ce que** ledit élément de poussée est une lame flexible (12) portée par ledit système de génération et venant en appui contre ladite lentille (9), lors de ladite rotation dudit agencement de liaison.

6. Afficheur selon l'une des revendications 2 à 5, **caractérisé en ce que** ledit appui sur un des crochets (11) est un appui linéique perpendiculaire à la face frontale de ladite lentille (9).

7. Afficheur selon la revendication 3 et 6, **caractérisé en ce que** le logement assurant ledit appui linéique est formé de deux brides (13A, 13B) portées par ledit agencement de liaison et séparées d'une distance supérieure au diamètre de la tige (11 B) du crochet.

8. Afficheur selon la revendication 6 ou 7, **caractérisé en ce que** ledit appui linéique est associé à un patin (14) d'appui ponctuel sur ladite lentille, disposé sur l'agencement de liaison à proximité du logement assurant cet appui linéique.

9. Afficheur selon l'une des revendications précédentes, **caractérisé en ce que** le logement assurant ledit encliquetage est formé d'un cliquet (15) porté par ledit agencement de liaison.

10. Afficheur selon l'une des revendications 2 à 9, **caractérisé en ce que** lesdits crochets (10, 11) sont disposés respectivement à une distance différente d'un bord latéral de ladite lentille (9).

11. Afficheur selon l'une des revendications précédentes, **caractérisé en ce que** lesdits crochets (10, 11) sont ancrés dans des alésages agencés sur ladite face d'entrée dudit imageur.

12. Afficheur selon l'une des revendications précédentes, **caractérisé en ce que** ledit agencement de liaison est usiné ou moulé dans une platine dudit système de génération (4) de faisceaux lumineux.

13. Paire de lunettes dont au moins une lentille (9) comporte un imageur (5) intégré et est pourvue de deux dits crochets (10, 11), afin de former un afficheur selon l'une des revendications 2 à 12.

## Claims

1. A display comprising an optical imager (5) for shaping light beams emitted by a light beam generator system (4), said beams being introduced into said imager via an inlet face, and for directing the beams towards the eye (O) of a wearer in order to enable an image (I) to be viewed, two hooks (10, 11) being in reference positions relative to the imager, and said light beam generator system including a connection arrangement for connection to said hooks (10, 11), the connection between said system and said hooks being releasable and said hooks (10, 11) being designed to be received in housings carried by the connection arrangement, the display being **characterized in that** said housings are arranged in such a manner that said connection arrangement is assembled on said hooks by applying thrust against one of said hooks (11), by turning about said hook, and by snap-fastening onto the other hook (10).

2. A display according to the preceding claim, **characterized in that** said imager (5) is incorporated in a lens (9) of a pair of eyeglasses.

3. A display according to either preceding claim, **characterized in that** each of said hooks is constituted by a sphere (10A, 10B) disposed at the end of a rod (11A, 11B).

4. A display according to claim 2 or claim 3, **characterized in that** it includes a pusher element for pushing said connection arrangement against said hooks (10, 11), said pushing being substantially perpendicular to the front face of said lens (9) .

5. A display according to the preceding claim, **characterized in that** said pusher element is a flexible blade (12) carried by said generator system and thrusting against said lens (9) while said connection arrangement is turning.

6. A display according to any one of claims 2 to 5, **characterized in that** said thrust on one of the hooks (11) is linear thrust perpendicular to the front face of said lens (9) .

7. A display according to claims 3 and 6, **characterized in that** the housing applying said linear thrust is formed by two projections (13A, 13B) carried by said connection arrangement and spaced apart from each other by a distance greater than the diameter of the rod (11B) of the hook.

8. A display according to claim 6 or claim 7, **characterized in that** said linear thrust is associated with a skid (14) for applying point thrust against said lens, the skid being arranged on the connection arrangement close to the housing providing said linear thrust.

9. A display according to any preceding claim, **characterized in that** the housing providing said snap-fastening is formed by a clip (15) carried by said connection arrangement.

10. A display according to any one of claims 2 to 9, **characterized in that** said hooks (10, 11) are disposed at respective different distances from a side edge of said lens (9) .

11. A display according to any preceding claim, **characterized in that** said hooks (10, 11) are anchored in bores arranged in said inlet face of said imager.

12. A display according to any preceding claim, **characterized in that** said connection arrangement is machined or molded in a plate of said light beam generator system (4).

13. A pair of eyeglasses having at least one lens (9) including an incorporated imager (5) and provided with two said hooks (10, 11) so as to form a display according to any one of claims 2 to 12.

## Patentansprüche

1. Anzeigeeinrichtung, umfassend einen optischen Bildgenerator (5), der dazu gedacht ist, optische Strahlen zu formen, die von einem System zum Erzeugen (4) von Lichtstrahlen, die über eine Eingangsseite in den Bildgenerator eingeführt werden, emittiert werden, und sie auf das Auge (O) des Trägers zu richten, um die Betrachtung eines Bildes (I) zu ermöglichen, wobei zwei Haken (10, 11) im Verhältnis zu dem Bildgenerator referenziert sind, und das System zum Erzeugen von Lichtstrahlen eine Anordnung zur Verbindung mit den Haken (10, 11) umfasst, wobei die Verbindung zwischen dem System und den Haken abnehmbar ist und die Haken (10, 11) dazu gedacht sind, in Aufnahmen untergebracht zu sein, die von der Verbindungsanordnung getragen werden, **dadurch gekennzeichnet, dass** die Aufnahmen angeordnet sind, so dass die Montage der Verbindungsanordnung auf den Haken durch Abstützen auf einem der Haken (11), Drehen um diesen Abstützpunkt und Einrasten an dem anderen Haken (10) ausgeführt wird.

2. Anzeigeeinrichtung nach dem vorhergehenden Anspruch, **dadurch gekennzeichnet, dass** der Bildgenerator (5) in ein Linsenglas (9) einer Brille integriert ist.

3. Anzeigeeinrichtung nach einem der vorhergehenden Ansprüche, **dadurch gekennzeichnet, dass** die Haken jeweils aus einer Kugel (10A, 10B) bestehen, die an dem Ende eines Stiels (11A, 11B) angeordnet ist.

4. Anzeigeeinrichtung nach Anspruch 2 oder 3, **dadurch gekennzeichnet, dass** sie ein Element zum Drücken der Verbindungsanordnung gegen die Haken (10, 11) umfasst, wobei dieses Drücken im Wesentlichen zur Vorderseite des Linsenglases (9) rechtwinklig ist.

5. Anzeigeeinrichtung nach dem vorhergehenden Anspruch, **dadurch gekennzeichnet, dass** das Drückelement ein biegsames Plättchen (12) ist, das von dem Erzeugungssystem getragen wird und sich an dem Linsenglas (9) bei der Drehung der Verbindungsanordnung abstützt.

6. Anzeigeeinrichtung nach einem der Ansprüche 2 bis 5, **dadurch gekennzeichnet, dass** das Abstützen an einem der Haken (11) ein längenbezogenes Abstützen rechtwinklig zur Vorderseite des Linsenglases (9) ist.

7. Anzeigeeinrichtung nach Anspruch 3 und 6, **dadurch gekennzeichnet, dass** die Aufnahme, die das längenbezogene Abstützen sicherstellt, aus zwei Flanschen (13A, 13B) gebildet wird, die von der Verbindungsanordnung getragen werden und um einen Abstand getrennt sind, der größer als der Durchmesser des Stiels (11B) des Hakens ist.

8. Anzeigeeinrichtung nach Anspruch 6 oder 7, **dadurch gekennzeichnet, dass** das längenbezogene Abstützen mit einem Gleitschuh (14) mit punktförmiger Abstützung auf dem Linsenglas verknüpft ist, der auf der Verbindungsanordnung in der Nähe der Aufnahme angeordnet ist, die dieses längenbezogene Abstützen sicherstellt.

9. Anzeigeeinrichtung nach einem der vorhergehenden Ansprüche, **dadurch gekennzeichnet, dass** die Aufnahme, die das Einrasten sicherstellt, aus einer Raste (15) besteht, die von der Verbindungsanordnung getragen wird.

10. Anzeigeeinrichtung nach einem der Ansprüche 2 bis 9, **dadurch gekennzeichnet, dass** die Haken (10, 11) jeweils in einem anderen Abstand von einem Seitenrand des Linsenglases (9) angeordnet sind.

11. Anzeigeeinrichtung nach einem der vorhergehenden Ansprüche, **dadurch gekennzeichnet, dass** die Haken (10, 11) in Bohrungen verankert sind, die auf der Eingangsseite des Bildgenerators angeordnet sind.

12. Anzeigeeinrichtung nach einem der vorhergehenden Ansprüche, **dadurch gekennzeichnet, dass** die Verbindungsanordnung in einer Unterlage des Systems zum Erzeugen (4) von Lichtstrahlen eingearbeitet oder geformt ist.

13. Brille, bei der mindestens ein Linsenglas (9) einen integrierten Bildgenerator (5) umfasst und mit zwei Haken (10, 11) versehen ist, um eine Anzeigeeinrichtung nach einem der Ansprüche 2 bis 12 zu bilden.
